# EUROPÄISCHE PATENTSCHRIFT

(11) **EP 1 204 446 B1**
(45) Veröffentlichungstag und Bekanntmachung des Hinweises auf die Patenterteilung: **29.03.2006**
(21) Anmeldenummer: 00951425.8
(22) Anmeldetag: 21.07.2000
(51) Int. Cl.: B01D 19/00

(54) **VORRICHTUNG ZUR ENTGASUNG VON FLÜSSIGKEITEN**
DEVICE FOR DEGASIFYING LIQUIDS
DISPOSITIF DE DEGAZAGE DE LIQUIDES

(30) Priorität: 10.08.1999 DE 19937690
(43) Veröffentlichungstag der Anmeldung: 15.05.2002
(73) Patentinhaber: Mommert, Franz, 58456 Witten (DE)
(72) Erfinder: Mommert, Franz, 58456 Witten (DE)
(74) Vertreter: Wenzel & Kalkoff
(86) Internationale Anmeldenummer: PCT/EP2000/007015
(87) Internationale Veröffentlichungsnummer: WO 2001/010529

(56) Entgegenhaltungen:
- DE-A- 2 715 444
- DE-C- 932 185
- US-A- 4 316 725
- US-A- 4 479 768
- US-A- 4 747 580

## Beschreibung

Die Erfindung bezieht sich auf eine Vorrichtung zur Entgasung von Flüssigkeiten mit einem Entgasungsbehälter, der eine Düsenplatte, deren eine Seite über eine Rohrleitung mit einem Zulauf für eine zu entgasende Flüssigkeit verbunden ist, einen Anschluß für eine Vakuumpumpe und einen Auslaß für entgaste Flüssigkeit aufweist. Bei einer solchen bekannten Vorrichtung zur Entgasung von Flüssigkeiten wird eine zu entgasende Flüssigkeit, beispielsweise Wasser, über eine Rohrleitung zu einer Düsenplatte geführt, die im Bereich einer Öffnung des Entgasungsbehälters an diesem angeflanscht ist.

Das Wasser wird unter hohem Druck durch die Düsenplatte gedrückt und verläßt die Düsenplatte in Richtung auf das Innere des Entgasungsbehälters. Die Düsenplatte bewirkt, daß die zu entgasende Flüssigkeit versprüht wird, so daß das in der Flüssigkeit enthaltene Gas freigesetzt wird. Das freigesetzte Gas wird mittels einer Vakuumpumpe, die an den Entgasungsbehälter angeschlossen ist, abgepumpt. Am Boden des Entgasungsbehälters befindet sich ein Auslaß für die entgaste Flüssigkeit.

Die entgaste Flüssigkeit sammelt sich im Entgasungsbehälter an dessen Boden, wobei der Pegelstand der entgasten Flüssigkeit mittels eines Schwimmers festgestellt wird. Die Stellung des Schwimmers wird in ein elektrisches Signal umgewandelt, mit dem ein Scheibenventil gesteuert wird, das sich in der Zuführungsleitung der Entgasungsanlage befindet. Bei Unterschreiten eines vorgegebenen Mindestpegels bewirkt das Signal, daß das Scheibenventil geöffnet wird, während bei Überschreiten eines vorbestimmten Maximalpegels für die entgaste Flüssigkeit das Signal ein Schließen des Scheibenventils hervorruft.

Diese bekannte Vorrichtung zur Entgasung von Flüssigkeiten hat den Nachteil, daß die zu entgasende Flüssigkeit diskontinuierlich der Düsenplatte zugeführt wird. Durch häufiges Betätigen des Scheibenventils aufgrund des von dem Schwimmer stammenden Signals entstehen in den von dem Scheibenventil aus stromaufwärts angeordneten Rohrleitungssystemen und Armaturen Druckschläge. Diese Druckschläge können zur Beschädigung der Rohrleitungssysteme und Armaturen führen. Weiterhin unterliegt auch das Scheibenventil selbst einer erheblichen Druckbeanspruchung, wenn es häufig betätigt wird, so daß seine Lebensdauer nicht als zufriedenstellend angesehen wird.

Ein weiterer Nachteil der bekannten Vorrichtung zur Entgasung von Flüssigkeiten besteht darin, daß aufgrund der diskontinuierlichen Arbeitsweise dieser Entgasungsanlage der Flüssigkeitsdruck vor der Düsenplatte variiert, wenn das Scheibenventil geöffnet oder geschlossen wird, so daß die Sprühfunktion der Düsenplatte unterschiedlich effektiv ist. Bei geringerem Druck vor der Düsenplatte ist ihre Sprühfunktion und damit ihre Entgasungseffektivität geringer als bei höherem Druck vor der Düsenplatte. Der Entgasungsgrad der Flüssigkeit am Boden des Entgasungsbehälters variiert daher mit sich änderndem Druck vor der Düsenplatte. Demgegenüber ist es jedoch wünschenswert, einen gleichbleibenden Entgasungsgrad der entgasten Flüssigkeit zu erreichen.

Die Schrift DE-A-932 185 (D4) offenbart eine Vorrichtung zum Entgasen von Flüssigkeiten in kontinuierlicher Betriebsweise. Die Vorrichtung umfaßt einen Entgasungsbehälter, an dem ein zum Anschluß einer Vakuumpumpe geeigneter Auslaß sowie ein Auslaß für entgaste Flüssigkeit angebracht sind. Außerdem ist eine Rohrleitung für den Zulauf der zu entgasenden Flüssigkeit vorgesehen, die einen in den Entgasungsbehälter hineinragenden Rohrabschnitt aufweist, in dessen Wandung flächig verteilt eine Velzahl von Düsenlöchern angeordnet sind. In dem Rohrabschnitt mit den Düsenlöchern ist konzentrisch ein kolbenförmiger Regelschieber relativ zu dem Rohrabschnitt gleitbeweglich gelagert und so angeordnet, dass durch Gleitbewegung des Regelschiebers die Abdeckung der Düsenlöcher variiert wird. Eine Antriebseinrichtung bewegt den Regelschieber in der Weise, dass entsprechend der zugeführten Menge an zu entgasender Flüssigkeit eine größere oder geringere Anzahl an Düsenlöchern freigelegt wird, so dass immer ein gleichmäßiges, der Entgasung förderliches Versprühen der Flüssigkeit gewährleistet ist.

Ausgehend hiervon liegt der Erfindung die Aufgabe zugrunde, eine alternative Vorrichtung zur Entgasung von Flüssigkeiten bereitzustellen, bei der ebenfalls ein möglichst kontinuierlicher Betrieb erreicht wird.

Diese Aufgabe wird bei der eingangs genannten Vorrichtung zur Entgasung von Flüssigkeiten dadurch gelöst, daß auf der Düsenplatte eine parallel zu dieser verlaufende Regelplatte angeordnet ist, die Düsenplatte und die Regelplatte relativ zueinander gleitbeweglich gelagert sind, die Regelplatte Öffnungen aufweist, die an die Lage der Düsen der Düsenplatte angepaßt und so angeordnet und ausgebildet sind, daß aufgrund einer relativen Gleitbewegung der Regelplatte gegenüber der Düsenplatte die Abdeckung der Düsen durch die Regelplatte variiert wird, und die Anlage eine Antriebseinrichtung zur relativen Gleitbewegung der Düsenplatte gegenüber der Regelplatte und eine Meßvorrichtung für die Größe des durch den Auslaß der Anlage fließenden entgasten Flüssigkeitsstrom aufweist, wobei die Meßvorrichtung zum Erzeugen eines Signales ausgebildet ist, das die Antriebseinrichtung steuert und die Größe des entgasten Flüssigkeitsstromes wiedergibt.

Durch das Zusammenwirken der Regelplatte mit der Düsenplatte, insbesondere durch eine relative Gleitbewegung der Regelplatte gegenüber der Düsenplatte und die damit einhergehende variierende Abdeckung der Düsen wird erreicht, daß die Durchtrittsmenge pro Zeit an Flüssigkeit bei der Düsenplatte mit der Regelplatte gesteuert werden kann. Zu diesem Zweck kann entweder die Regelplatte gegenüber der Düsenplatte, die ortsfest ist, beweglich sein oder umgekehrt. Es kommt ausschließlich auf eine Relativbewegung zwischen der Regelplatte und der Düsenplatte an, um die Abdeckung der Düsen zu ändern.

Bei einer Ausführungsform, bei der die Regelplatte gegenüber der Düsenplatte beweglich ist, kann die Bewegung der Regelplatte abhängig von der Größe des entgasten Flüssigkeitsstromes gesteuert werden. Zu diesem Zweck dient die Meßvorrichtung für den entgasten Flüssigkeitsstrom. Die Meßvorrichtung sendet ein für die Größe des entgasten Flüssigkeitsstroms repräsentatives Signal aus, das nach geeigneter Umsetzung die Antriebseinrichtung für die Regelplatte ansteuert.

Auf diese Weise wird ein kontinuierlicher Betrieb der Vorrichtung zur Entgasung von Flüssigkeiten erreicht, so daß auch die entgaste Flüssigkeit einen über die Zeit gleichbleibenden Entgasungsgrad aufweist. Darüber hinaus wird erreicht, das das im Stand der Technik eingesetzte Scheibenventil im Bereich der zu dem Zulauf für zu entgasende Flüssigkeit führenden Rohrleitung im Betrieb der Vorrichtung zur Entgasung von Flüssigkeiten nicht betätigt werden muß, sondern allenfalls als Absperrung dient. Die wartungsfreie Standzeit der Vorrichtung zur Entgasung von Flüssigkeiten ist daher deutlich größer als bei der bekannten Vorrichtung, deren Standzeit in erster Linie durch die Lebensdauer des dort eingesetzten Scheibenventils begrenzt ist.

Darüber hinaus unterliegen Rohrleitungssysteme und Armaturen im Bereich des Zulaufs für zu entgasende Flüssigkeit nicht etwaigen Druckschlägen, die aufgrund des Schaltens des Scheibenventils bei der bekannten Anlage auftreten.

Die Meßvorrichtung für den entgasten Flüssigkeitsstrom kann von einem Schwimmer gebildet werden, der auf der Oberfläche der sich am Boden des Entgasungsbehälters befindenden entgasten Flüssigkeit schwimmt und dessen relative Lage zum Boden des Entgasungsbehälters den Füllpegel der entgasten Flüssigkeit wiedergibt. Die relative Lage des Schwimmers zum Boden des Entgasungsbehälters kann in ein elektrisches Signal umgewandelt werden, das die Antriebseinrichtung entweder für die Düsenplatte oder für die Regelplatte ansteuert.

Alternativ zu dem Schwimmer sind auch kapazitive Meßsysteme einsetzbar, mit denen der Füllstand der entgasten Flüssigkeit am Boden des Entgasungsbehälters gemessen werden kann. Ebenfalls können auch Durchflußmesser im Bereich einer Leitung, durch die hindurch abfließende entgaste Flüssigkeit geführt wird als die Meßvorrichtung für die Größe des entgasten Flüssigkeitsstromes dienen. Grundsätzlich kann jedoch jede Meßvorrichtung eingesetzt werden, die auf direktem oder indirektem Wege zum Messen der Abgabedurchflußmenge pro Zeiteinheit für die entgaste Flüssigkeit aus dem Flüssigkeitsentgasungsbehälter geeignet ist.

Die Regelplatte kann aus folgenden Materialien bestehen: Keramik, Metall, Kunststoffe. Bevorzugt besteht die Regelplatte jedoch im wesentlichen aus Teflon, wobei auch Elemente zum Versteifen der Regelplatte vorgesehen sein können. Teflon gestattet eine einfache Bearbeitung zur Ausbildung der Öffnungen der Regelplatte und bietet auch eine für den Einsatzzweck bei einer Flüssigkeitsentgasungsanlage geeignete Festigkeit.

Bei einer weiteren Ausführungsform der Erfindung sind die Düsenplatte und die Regelplatte kreisrund ausgebildet und um eine durch die Mittelpunkte der Düsen- und der Regelplatte verlaufende Drehachse relativ zueinander gleitbeweglich gelagert. In diesem Fall erfolgt die variierende Abdeckung der Düsen der Düsenplatte durch eine Drehbewegung der Düsenplatte relativ zu der Regelplatte. Die Düsen der Düsenplatte können bevorzugt an ihrer der Regelplatte zugeordneten Seite kreisrund ausgebildet sein, während die Öffnungen der Regelplatte als kreisbogenförmig verlaufende Schlitze ausgebildet sind, wobei mit zunehmendem Abstand vom Mittelpunkt der Regelplatte aus die Länge der Schlitze zunimmt. Dabei ist die Länge der Schlitze so bemessen, daß bei Düsen mit übereinstimmendem Querschnitt unabhängig von dem Abstand der Düsen vom Mittelpunkt der Regelplatte bei einer Drehbewegung einer Regelplatte gegenüber der Düsenplatte jede Düse im wesentlichen gleichförmig abgedeckt oder freigelegt wird.

Bei der Ausführungsform, bei der die Regelplatte und die Düsenplatte eine relative Drehbewegung zueinander durchführen können, kann die Düsenplatte ortsfest sein und die Antriebseinrichtung als Drehantrieb mit einem auf der Drehachse angeordneten Schaft ausgebildet sein, an dem die Regelplatte befestigt ist. Die Antriebseinrichtung kann ein pneumatischer Drehantrieb sein, wobei das von der Meßvorrichtung stammende elektrische Signal von einem elektrisch/pneumatischen Umformer in ein Steuersignal für den pneumatischen Drehantrieb umgesetzt wird. Der pneumatische Drehantrieb kann über eine Laterne an einem Gehäuse der Düsenplatte befestigt sein.

Alternativ zu der Drehbewegung der Düsenplatte relativ zu der Regelplatte mittels eines Drehantriebs kann die Antriebseinrichtung auch als Hubantrieb mit einem Hubelement ausgebildet sein, an dem die Regelplatte befestigt ist. In diesem Fall können die Öffnungen der Regelplatte wie auch die Düsen der Düsenplatte kreisrund oder bevorzugt als Langlöcher ausgebildet sein, wobei ihre jeweiligen Abmessungen übereinstimmen.

Grundsätzlich ist es günstiger, wenn die Regelplatte auf der dem Zulauf für zu entgasende Flüssigkeit angeordneten Seite der Düsenplatte angeordnet ist, da sie in diesem Fall infolge des in der Zulauf-Rohrleitung herrschenden Drucks gegen die Düsenplatte gepresst wird. Es ist jedoch auch möglich, daß die Regelplatte im Inneren des Entgasungsbehälters auf der Düsenplatte aufliegt. In diesem Fall ergibt sich jedoch das Problem, daß aufgrund des Druckgefälles von dem Zulauf über die Düsenplatte in den unter Vakuum stehenden Entgasungsbehälter die Regelplatte eine Druckkraft erfährt, die von der Düsenplatte weg gerichtet ist. Es wird daher häufig erforderlich sein, die Düsenplatte gegenüber der Druckkraft abzustützen. Außerdem müßte bei dieser Ausführungsform ein Teil der Antriebseinrichtung für die Regelplatte innerhalb des Entgasungsbehälters untergebracht werden. Dies ist aus Qualitätsgründen für die entgaste Flüssigkeit nicht wünschenswert.

Die Erfindung wird nachfolgend anhand von Ausführungsbeispielen in Zusammensicht mit den Zeichnungen noch näher erläutert.

Es zeigen:
- Fig. 1:: eine Seitenansicht eines Teils eine Vorrichtung zur Entgasung mit einer Düsenplatte, einer Regelplatte und einem regelbaren Drehantrieb für die Regelplatte;
- Fig. 2:: eine Seitenansicht einer Düsenplatte mit darauf angeordneter Regelplatte; und
- Fig. 3:: eine schematische Darstellung einer Vorrichtung zur Entgasung von Flüssigkeiten nach dem Stand der Technik.

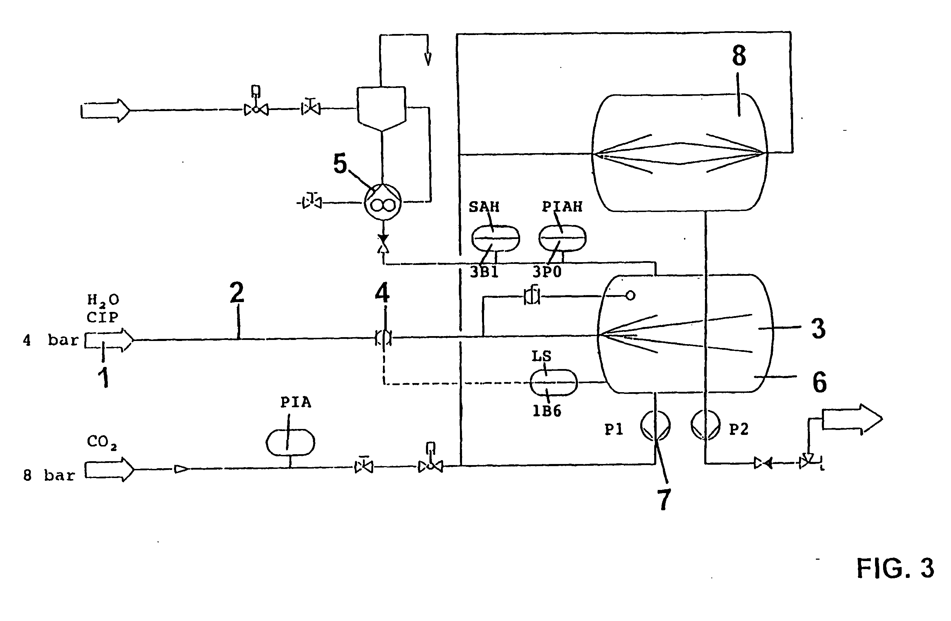

Wie Fig. 3 zu entnehmen ist, die eine Vorrichtung zur Entgasung von Flüssigkeiten nach dem Stand der Technik zeigt, weist diese Vorrichtung einen Flüssigkeitszulauf 1 auf, der über eine Rohrleitung 2 an einen Flüssigkeitsentgasungsbehälter 3 angeschlossen ist. Im Bereich der Rohrleitung 2 ist ein Scheibenventil 4 vorgesehen, das diskontinuierlich öffnet und schließt. An der in Fig. 3 links angeordneten Seite des Entgasungsbehälters 3 ist eine Düsenplatte (in Fig. 3 nicht dargestellt) angeordnet, durch die die zu entgasende Flüssigkeit in den Entgasungsbehälter 3 hinein versprüht wird. Das in dem Entgasungsbehälter 3 freigesetzte Gas wird mittels einer Vakuumpumpe 5, die an dem Entgasungsbehälter 3 angeschlossen ist, abgepumpt.

Die (vor)entgaste Flüssigkeit sammelt sich im Bodenbereich 6 des Entgasungsbehälters 3 und wird mittels einer Umwälzpumpe 7 aus dem Entgasungsbehälter 3 abgesaugt.

Der Entgasungsprozeß für die zu entgasende Flüssigkeit setzt sich dann in einem weiteren Entgasungsbehälter 8 fort, wobei jedoch dieser Teil des Entgasungsprozesses für die vorliegende Erfindung nicht relevant ist und daher nicht erläutert wird.

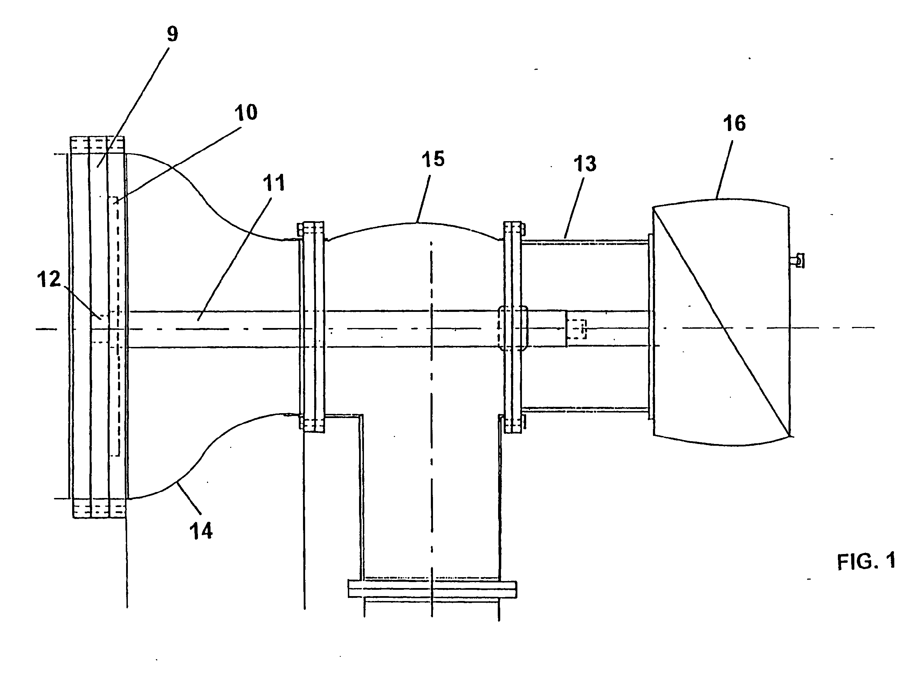

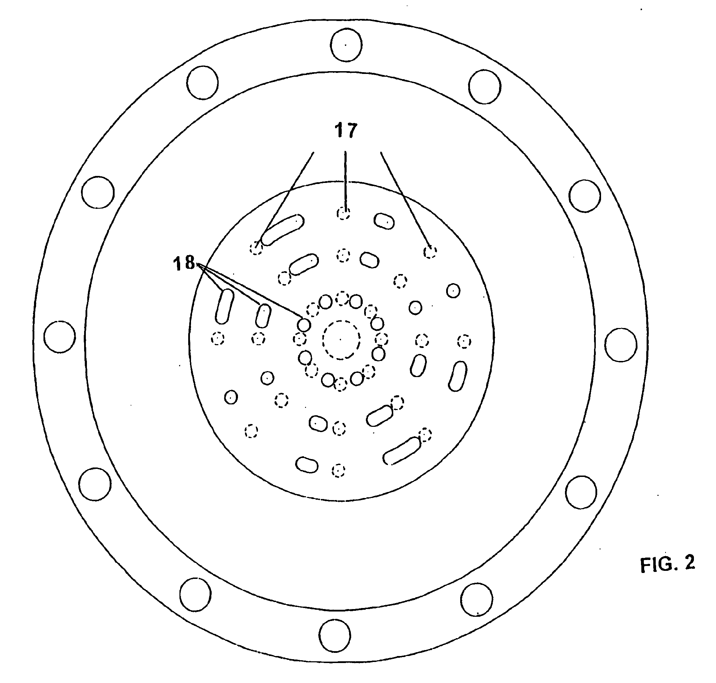

Im Bodenbereich 6 des Entgasungsbehälters 3 ist ein Schwimmschalter (in Fig. 3 nicht dargestellt) vorgesehen, der bei Unterschreiten des Pegelstandes an entgaster Flüssigkeit und bei Überschreiten eines vorbestimmten Pegelstandes an entgaster Flüssigkeit in dem Entgasungsbehälter 3 ein Öffnen bzw. Schließen des Scheibenventils 4 bewirkt. Die erfindungsgemäße Vorrichtung zur Entgasung von Flüssigkeiten entspricht im wesentlichen der in Fig. 3 dargestellten Ausbildung. Die Änderungen und/oder Ergänzungen der bekannten Anlage aus Fig. 3 werden anhand der Fig. 1 und 2 beschrieben.

Fig. 1 zeigt in einer Seitenansicht denjenigen Teil der erfindungsgemäßen Vorrichtung zur Entgasung von Flüssigkeiten, der unmittelbar an einen Entgasungsbehälter angeflanscht ist. Ein solcher Entgasungsbehälter wäre in Fig. 1 links von der Düsenplatte 9 anzuordnen. Auf der dem Entgasungsbehälter abgewandten Seite der Düsenplatte 9 ist eine Regelplatte 10 angeordnet, die an einem Schaft 11 befestigt ist. Der Schaft 11 weist an seinem einen Ende einen Zapfen 12 auf, der an der kreisrunden, ortsfesten Düsenplatte 9 auf deren Mittelachse drehbar gelagert ist. Der Schaft 11 ist Teil eines regelbaren Drehantriebs 16 für die Regelplatte 10, der über die Abflußmenge an entgaster Flüssigkeit pro Zeiteinheit aus dem Entgasungsbehälter gesteuert wird. Zu diesem Zweck ist eine Meßvorrichtung vorgesehen, deren Meßsignal die Größe des entgasten Flüssigkeitsstromes wiedergibt und das dem Drehantrieb 12 zugeleitet wird.

Der Drehantrieb 12 ist luftbetätigt, wobei das elektrische Signal der Meßvorrichtung mittels eines elektrisch/pneumatischen Umformers in ein Signal umgesetzt wird, das die Drehung des Schaftes und damit der Regelplatte 10 gegenüber der ortsfesten Düsenplatte 9 bestimmt.

Zur Zuleitung einer zu entgasenden Flüssigkeit ist zwischen einer Laterne 13 des Drehantriebs 12 und einem Gehäuse 14 der Düsenplatte 9 ein T-Stück 15 angeordnet, das an eine Rohrleitung angeschlossen werden kann, die mit einem Flüssigkeitszulauf verbunden ist.

Wie aus Fig. 2 hervorgeht, sind die Düsenplatte 9 und die Regelplatte 10 kreisrund ausgebildet. Die Düsenplatte 9 weist eine Mehrzahl Sprühdüsen 17 auf, die auf drei konzentrischen Kreisen als im Querschnitt kreisrunde Öffnungen ausgebildet sind. Auch die Regelplatte 10 ist mit Öffnungen 18 versehen, die derart relativ zu den Öffnungen 17 der Düsenplatte 9 angeordnet sind, daß eine Drehbewegung der Regelplatte 10 gegenüber der Düsenplatte 9 um deren Mittelachse eine variierende Abdeckung der Sprühdüsen 17 durch die Regelplatte 10 bewirkt. Die Öffnungen 18 der Regelplatte 10 sind teils als kreisrunde Öffnungen und teils als schlitzförmige Öffnungen ausgebildet. Die jeweilige Ausbildung der Öffnungen 18 ist so gewählt, daß eine Drehbewegung der Regelplatte 10 gegenüber der Düsenplatte 9 eine möglichst lineare Änderung der Durchflußmenge durch die Düsenplatte 9 und die Regelplatte 10 bewirkt.

## Patentansprüche

1. Vorrichtung zur Entgasung von Flüssigkeiten mit einem Entgasungsbehälter (3), der eine Düsenplatte (9), deren eine Seite über eine Rohrleitung (2) mit einem Zulauf für eine zu entgasende Flüssigkeit verbunden ist, einen Anschluß für eine Vakuumpumpe (5) und einen Auslaß für entgaste Flüssigkeit aufweist,
wobei
auf der Düsenplatte (9) eine parallel zu dieser verlaufende Regelplatte (10) angeordnet ist,
die Düsenplatte (9) und die Regelplatte (10) relativ zueinander gleitbeweglich gelagert sind,
die Regelplatte (10) Öffnungen (18) aufweist, die an die Lage der Düsen (17) der Düsenplatte (9) angepaßt und so angeordnet und ausgebildet sind, daß aufgrund einer relativen Gleitbewegung der Regelplatte (10) gegenüber der Düsenplatte (9) die Abdeckung der Düsen (17) durch die Regelplatte (10) variiert wird, und
eine Antriebseinrichtung (16) zur relativen Gleitbewegung der Düsenplatte (9) gegenüber der Regelplatte (10) und eine Meßvorrichtung für die Größe des durch den Auslaß der Anlage fließenden entgasten Flüssigkeitsstroms vorgesehen ist, wobei die Meßvorrichtung zum Erzeugen eines Signales ausgebildet ist, das die Antriebseinrichtung (16) steuert und die Größe des entgasten Flüssigkeitsstromes wiedergibt.

2. Vorrichtung nach Anspruch 1, **dadurch gekennzeichnet, daß** die Regelplatte (10) im wesentlichen aus Teflon besteht.

3. Vorrichtung nach Anspruch 1 oder 2, **dadurch gekennzeichnet, daß** die Düsenplatte (9) und die Regelplatte (10) kreisrund ausgebildet und um eine durch die Mittelpunkte der Düsen- und der Regelplatte (9; 10) verlaufende Drehachse relativ zueinander gleitbeweglich gelagert sind.

4. Vorrichtung nach Anspruch 3, **dadurch gekennzeichnet, daß** die Düsen (17) der Düsenplatte (9) an ihrer der Regelplatte (10) zugeordneten Seite kreisrund sind und die Öffnungen (18) der Regelplatte (10) als kreisbogenförmig verlaufende Schlitze ausgebildet sind, wobei mit zunehmendem Abstand vom Mittelpunkt der Regelplatte aus die Länge der Schlitze zunimmt.

5. Vorrichtung nach einem der Ansprüche 3 oder 4, **dadurch gekennzeichnet, daß** die Düsenplatte (9) ortsfest ist und die Antriebseinrichtung (16) als Drehantrieb mit einem auf der Drehachse angeordneten Schaft (11) ausgebildet ist, an dem die Regelplatte (10) befestigt ist.

6. Vorrichtung nach Anspruch 5, **dadurch gekennzeichnet, daß** die Antriebseinrichtung (16) ein pneumatischer Drehantrieb ist.

7. Vorrichtung nach Anspruch 6, **dadurch gekennzeichnet, daß** der pneumatische Drehantrieb (16) über eine Laterne (13) an einem Gehäuse (14) der Düsenplatte (9) befestigt ist.

8. Vorrichtung nach einem der Ansprüche 1 oder 2, **dadurch gekennzeichnet, daß** die Antriebseinrichtung (16) als Hubantrieb mit einem Hubelement ausgebildet ist, an dem die Regelplatte (10) befestigt ist.

## Claims

1. An apparatus for degassing liquids, having a degassing container (3) comprising a nozzle plate (9) having its one side connected to an inlet for a liquid to be degassed via a conduit (2), a port for a vacuum pump (5), and an outlet for degassed liquid, wherein
a control plate (10) is arranged on the nozzle plate (9) and extending parallel to it,
the nozzle plate (9) and the control plate (10) are supported in a sliding relationship relative to each other,
the control plate (10) has openings (18) adapted to the positions of the nozzles (17) of the nozzle plate (9) and arranged and formed such that the covering condition of the nozzles (17) by the control plate (10) is varied due to a relative sliding motion of the control plate (10) with respect to the nozzle plate (9), and
a driving means (16) for driving the relative sliding motion of the nozzle plate (9) with respect to the control plate (10) and a measuring means for the magnitude of the degassed liquid flow flowing through the outlet of the system are provided, wherein the measuring means is adapted to generate a signal which controls the driving means (16) and reflects the magnitude of the degassed liquid flow.

2. An apparatus according to claim 1, **characterized in that** said control plate (10) is essentially of Teflon.

3. An apparatus according to claim 1 or 2, **characterized in that** said nozzle plate (9) and said control plate (10) have a circular configuration and are supported such that they are slidable with respect to each other about a rotary axis extending through the centre points of the nozzle and control plates (9; 10).

4. An apparatus according to claim 3, **characterized in that** the nozzles (17) of the nozzle plate (9) are circular on their side associated with the control plate (10) and the openings (18) of the control plate (10) are configured as slots extending on a curved circle line, wherein the length of the slots increases as the distance from the centre point of the control plate increases.

5. An apparatus according to any one of claims 3 or 4, **characterized in that** said nozzle plate (9) is stationary and said driving means (16) is formed as a rotary drive having a shaft (11) arranged on the rotary axis, to which the control plate (10) is attached.

6. An apparatus according to claim 5, **characterized in that** said drive means (16) is a pneumatic rotary drive.

7. An apparatus according to claim 6, **characterized in that** said pneumatic rotary drive (16) is mounted on a housing (14) of the nozzle plate (9) via a lantern (13).

8. An apparatus according to any one of claims 1 or 2, **characterized in that** said drive means (16) is configured as a lifting drive with a lifting element, to which the control plate (10) is attached.

## Revendications

1. Dispositif pour le dégazage de liquides avec un récipient de dégazage (3) qui présente une plaque de tuyères (9) dont l'un des côtés est relié par une tuyauterie (2) avec une alimentation pour un liquide à dégazer, un raccord pour une pompe à vide (5) et une sortie pour du liquide dégazé,
une plaque de réglage (10) étant placée sur la plaque de tuyères (9) parallèlement à celle-ci,
la plaque de tuyères (9) et la plaque de réglage (10) étant positionnées mobiles par glissement l'une par rapport à l'autre,
la plaque de réglage (10) présentant des ouvertures (18) qui sont adaptées à la position des tuyères (17) de la plaque de tuyères (9) et qui sont placées et configurées de telle manière qu'en raison d'un mouvement de glissement relatif de la plaque de réglage (10) par rapport à la plaque de tuyères (9) le recouvrement des tuyères (17) est varié par la plaque de réglage (10) et
un dispositif d'entraînement (16) étant prévu pour le mouvement de glissement relatif de la plaque de tuyères (9) par rapport à la plaque de réglage (10) et un dispositif de mesure étant prévu pour la grandeur du flux de liquide dégazé qui traverse la sortie de l'installation, le dispositif de mesure étant configuré pour produire un signal qui commande le dispositif d'entraînement (16) et qui reproduit la grandeur du flux de liquide dégazé.

2. Dispositif selon la revendication 1, **caractérisé en ce que** la plaque de réglage (10) est constituée essentiellement en téflon.

3. Dispositif selon la revendication 1 ou 2, **caractérisé en ce que** la plaque de tuyères (9) et la plaque de réglage (10) sont configurées rondes et positionnées mobiles par glissement l'une par rapport à l'autre autour d'un axe de rotation qui traverse les centres de la plaque de tuyères et de la plaque de réglage (9 ; 10).

4. Dispositif selon la revendication 3, **caractérisé en ce que** les tuyères (17) de la plaque de tuyères (9) sont rondes sur leur côté tourné vers la plaque de réglage (10) et les ouvertures (18) de la plaque de réglage (10) sont configurées comme des fentes en forme d'arc de cercle, la longueur des fentes augmentant avec un écart croissant à partir du centre de la plaque de réglage.

5. Dispositif selon l'une des revendications 3 ou 4, **caractérisé en ce que** la plaque de tuyères (9) est fixe et le dispositif d'entraînement (16) est configuré comme entraînement rotatif avec une tige (11) placée sur l'axe de rotation sur laquelle la plaque de réglage (10) est fixée.

6. Dispositif selon la revendication 5, **caractérisé en ce que** le dispositif d'entraînement (16) est un entraînement rotatif pneumatique.

7. Dispositif selon la revendication 6, **caractérisé en ce que** l'entraînement rotatif pneumatique (16) est fixé par une lanterne (13) à un bâti (14) de la plaque de tuyères (9).

8. Dispositif selon l'une des revendications 1 ou 2, **caractérisé en ce que** le dispositif d'entraînement (16) est configuré comme entraînement de levage avec un élément de levage auquel la plaque de réglage (10) est fixée.
